# EUROPEAN PATENT APPLICATION

(11) **EP 4 810 827 A1**
(43) Date of publication of application: **23.09.2026**
(21) Application number: 26164999.0
(22) Date of filing: 16.03.2026
(51) Int. Cl.: F16H 55/06, F16H 55/14, B22F 3/00

(54) **TORSIONALLY COMPLIANT GEAR**

(30) Priority: 18.03.2025 US 202519082844
(71) Applicant: Lockheed Martin Corporation, Bethesda, Maryland 20817 (US)
(72) Inventor: Gmirya, Yuriy, Woodbridge, 06525 (US); Toni, Darryl M., Clinton, 06413 (US)
(74) Representative: Schmitt-Nilson Schraud Waibel Wohlfrom Patentanwälte Partnerschaft mbB

(57) **Abstract**

A monolithic transmission gear produced through additive manufacturing. The transmission gear includes a central hub defining a rotation axis, an outer ring including a plurality of gear teeth spaced circumferentially about the outer ring, and a web interconnecting the central hub to the outer ring. The web including a plurality of radial springs extending between the central hub and the outer ring. The radial springs being radially stiff to center the outer ring about the central hub and being torsionally resilient to permit relative rotation between the outer ring and the central hub.

## Description

The present disclosure relates to transmission systems, and more particularly, relates to torsionally compliant gears for providing balanced torque loads between splitting gear assemblies in split torque transmission systems, especially in split torque transmission systems for helicopters.

Transmission systems include gear trains of intermeshing gears and are operative to couple a torque source (e.g., engine) to an output. Some transmissions include two or more pathways to give or receive torque. For instance, in helicopter transmission systems, it may be desirable to split the power output so that each load path may equally drive the output. This portion of the drive train is commonly referred to as a split torque transmission. Such split torque transmissions reduce the tooth loading of the intermeshing gears and result in lighter weight drive train assemblies. Ideally, a split torque transmission module should be designed to ensure that torque is split in equal proportions between the load paths. Generally, solutions for split torque transmission include more parts to ensure the torque is split equally making the drive trains heavier.

In some aspects, the techniques according to the present disclosure relate to a monolithic transmission gear produced through additive manufacturing. The transmission gear includes a central hub defining a rotation axis, an outer ring including a plurality of gear teeth spaced circumferentially about the outer ring, and a web interconnecting the central hub to the outer ring. The web including a plurality of radial springs extending between the central hub and the outer ring. The radial springs being radially stiff to center the outer ring about the central hub and being torsionally resilient to permit relative rotation between the outer ring and the central hub.

In some aspects, the techniques described herein relate to a transmission gear including a central hub defining a rotation axis and an exterior wall, an outer ring including a plurality of gear teeth spaced circumferentially about the outer ring, the outer ring defining an interior wall, and a plurality of radial springs extending between the interior wall of the outer ring and the exterior wall of the central hub. The radial spring includes a first portion coupled to either the interior wall or the exterior wall and a second portion that is moveable relative to the first portion to permit relative rotation between the outer ring and the central hub.

In some aspects, the techniques described herein relate to a method of manufacturing a gear. The method includes forming a body by an additive manufacturing process. The body having a central hub defining a rotation axis, an outer ring, and plurality of radial springs extending between the between the central hub and the outer ring. The radial springs being radially stiff to center the outer ring about the central hub and being torsionally resilient to permit relative rotation between the outer ring and the central hub.

Other aspects of the disclosure will become apparent by consideration of the detailed description and accompanying drawings.

### BRIEF DESCRIPTION OF THE DRAWINGS

FIG. 1 is a schematic view of a helicopter illustrating a helicopter drive train.
FIG. 2 is a perspective view of a helicopter drive train including a plurality of different gears.
FIG. 3 is a perspective view of a gear for use with the helicopter drive train of FIG. 2.
FIG. 4 is a detailed view of a portion of the gear of FIG. 3.
FIG. 5 is cross-sectional view of the gear of FIG. 3 in the drive train of FIG. 2.
FIG. 6 is a perspective view of a gear for use with the helicopter drive train of FIG. 2 according to another embodiment.
FIG. 7 is a detailed view of a portion of the gear from FIG. 6.
FIG. 8 is a perspective view of a Laser Powder Bed Fusion (LPBF) machine used to produce the gear of FIG. 3.

Before any embodiments are explained in detail, it is to be understood that the embodiments described herein are provided as examples and the details of construction and the arrangement of the components described herein or illustrated in the accompanying drawings should not be considered limiting. Also, it is to be understood that the phraseology and terminology used herein is for the purpose of description and should not be regarded as limited. The use of "including," "comprising" or "having" and variations thereof herein is meant to encompass the items listed thereafter and equivalents thereof as well as additional items. The terms "mounted," "connected" and "coupled" are used broadly and encompass both direct and indirect mounting, connecting and coupling.

In addition, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. Furthermore, the term "radially" as used herein may refer to a direction or a relationship of components with respect to a line extending outward from a shared centerline, axis, or similar reference, for example in a plane of a cylinder or disc that is perpendicular to the centerline or axis. As used herein, the term "substantially," "about," and "approximately" denotes within 5% to account for manufacturing tolerances.

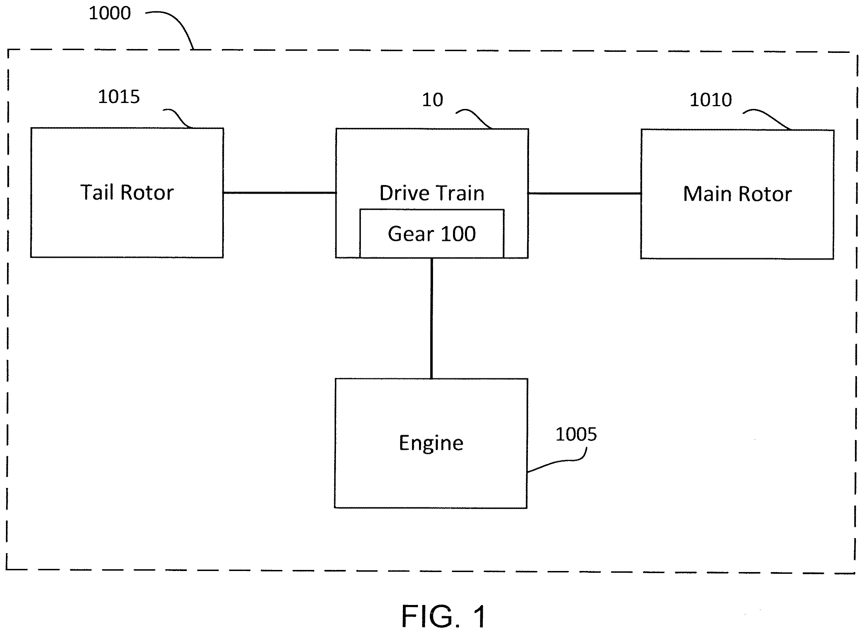

FIG. 1 illustrates a helicopter drive train 10 for use in a rotorcraft vehicle such as a helicopter 1000. The helicopter 1000 includes an engine 1005 that transfers torque to the drive train 10. The engine 1005 may be any engine that powers helicopters such as a gas turbine engine, turboprop engine, turboshaft engine, or the like. In addition, as discussed in more detail below, the engine 1005 may be two engines that provide two independent inputs to the drive train 10. During operation, the engine 1005 drives the drive train 10 to transmit torque to a main rotor 1010. In some embodiments, the engine 1005 may also transfer torque to a tail rotor 1015 or another rotor of the helicopter 1000 separate from the main rotor 1010. As will be discussed, the drive train 10 includes a lightweight gear 100 that reduces the weight of the drive train 10 and the helicopter 1000 which may increase the fuel economy of the helicopter 1000, assist in dampening vibrations in the drive train 10, or reduce the overall noise of operating the helicopter 1000.

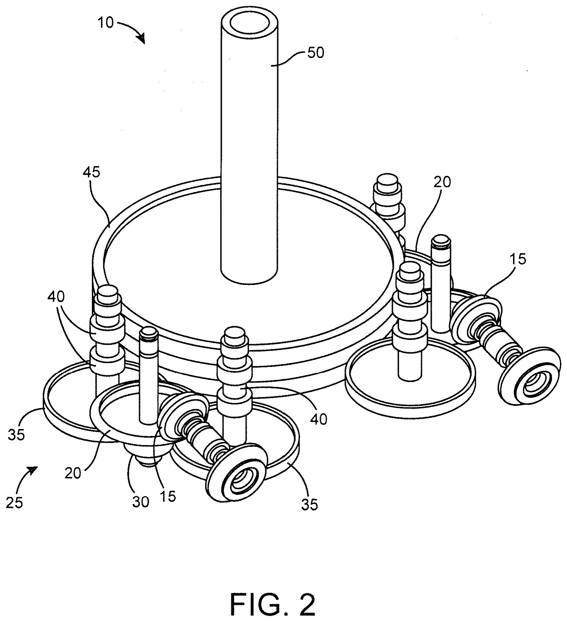

FIG. 2 illustrates a helicopter drive train 10 (i.e., transmission system) where the outer casing or gearbox has been omitted to view various internal drive train components and the associated interaction. The drive train 10 delivers torque from engine shafts to a main rotor shaft. In the illustrated embodiment, two engines (not shown) drive input bevel pinions 15. Each input bevel pinion 15 drives a first stage bevel gear 20 which, in turn, drives a split torque transmission module 25. The split torque transmission module 25 includes a second stage spur pinion 30 disposed between a pair of load share spur gears 35. More specifically, the first stage bevel gear 20 is coaxial with and drives the second stage spur pinion 30, which is disposed between and drives each of the load share spur gears 35. Each of these load share spur gears 35 are co-axial with and drive second stage double helical pinions 40. Each of the helical pinions 40 drives a large diameter double helical bull gear 45 which, in turn, drives a main rotor shaft 50. The loading of helical pinions 40 is extremely high (i.e., between 800-900 ft-lbs). Due to the torque loading transmitted through the load share spur gears 35, the torque load is split equally by the split torque transmission.

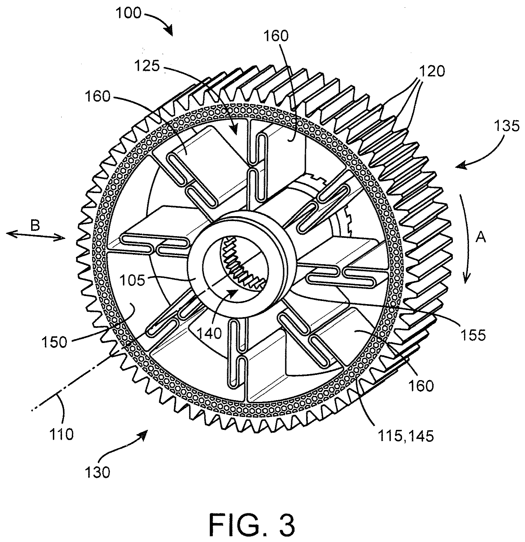

FIG. 3 illustrates a transmission gear 100 for use in the drive train 10 of FIG. 2. In the illustrated embodiment, the gear 100 is similar to the load share spur gear 35 discussed above. However, for illustrative purposes the helical pinions 40 have been removed. As discussed in more detail below, in other embodiments, the helical pinions 40 may be integral with the gear 100 or coupled to the gear 100 using known techniques in the art. In further embodiments, the gear 100 may drive other gears or pinions besides the helical pinions 40 within a split torque transmission. In some embodiments, the gear 100 may be other gears or other gears within a drive train.

The gear 100 defines a body including a central hub 105 that defines a rotation axis 110, an outer ring 115 including a plurality of gear teeth 120 extending therefrom, and a web 125 interconnecting the hub 105 to the outer ring 115. The central hub 105, the outer ring 115, and the web 125 extend circumferentially about the rotation axis 110 so that the gear 100 is generally cylindrical including a first side 130 and a second side 135 opposite the first side. The hub 105 defines a central opening 140 with the rotation axis 110 extending centrally through the central opening 140. In some embodiments, the central opening 140 is configured to receive a shaft for rotation therewith. As such, the central opening 140 may include a feature such as a notch, key, or spline to unitize the shaft and the gear for rotation. In the illustrated embodiment, the outer ring 115 is defined by a wall 145 that extends between the first and second sides 130, 135. The wall 145 defines an interior wall 150 of the outer ring 115 that is in facing relationship with an exterior wall 155 of the hub 105.

The web 125 is defined by the area between the interior wall 150 of the outer ring 115 and the exterior wall of the hub 105. A plurality of radial stiffeners (i.e., radial springs 160) extend between the interior wall 150 and the exterior wall 155 within the web 125. In the illustrated embodiment, there are eight radial springs 160 extending between the interior wall 150 and the exterior wall 155. In other embodiment, there may be more than eight or less than eight radial springs 160. For example, the web 125 may include 2, 4, 6, 10, or 12 radial springs 160. Alternatively, the web 125 may include 3, 5, 7, 9, or 11 radial springs 160. The radial springs 160 are evenly spaced circumferentially about the web 125 and rotation axis (e.g., 45 degrees apart in the illustrated embodiment). As shown in FIG. 3, radial springs 160 on opposite sides of the hub 105 are aligned. In other words, an imaginary line extends through a radial spring 160 on one side of the hub 105, through the rotation axis 110, and through a radial spring 160 on an opposite side of the hub 105. As such, the radial springs 160 extend generally rectilinear from the central hub 105 and rotation axis 110.

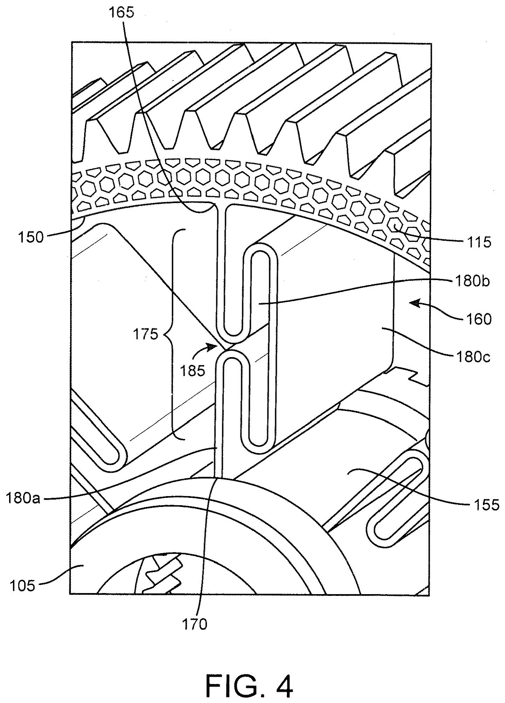

With reference to FIG. 4, each radial spring 160 includes a first end 165 coupled to the interior wall 150, a second end 170 coupled to the exterior wall 155, and a middle portion 175 extending between the first and second ends 165, 170. The middle portion 175 switchbacks or snakes between the first and second ends 165, 170 to define several layers 180 that are spaced apart from each other. In the illustrated embodiment, the radial springs 160 define three layers 180A, 180B, 180C. The first and second layers 180A, 180B define a gap 185 between the exterior wall 155 and the interior wall 150 while the third layer 180C connects the first end 165 to the second end 170. In other embodiments, the radial springs 160 may include more than three layers 180 by including more switchbacks, or located symmetrically on both sides of layer 180A. The radial springs 160 are plate-like or similar to a sheet. In other words, a thickness of the radial springs 160 is significantly less than a length or depth of the radial springs 160. Due to the switchbacks, layers 180, and gap 185, the radial springs 160 are resilient and allowed to deform in a circumferential or torsional direction A (FIG. 3). In other words, the radial springs 160 allow the outer ring 115 to rotate relative to the central hub 105 about the rotation axis 110. However, since the radial springs 160 extend rectilinear between the hub 105 and the outer ring 115, the radial springs 160 are rigid or stiff in a radial direction B (FIG. 3). The radial springs 160 are radially stiff to rigidly center the gear teeth 120 about the central hub 105 while being torsionally resilient to permit relative rotation displacement between the gear teeth 120 and the central hub 105.

During operation of the transmission described above, the gear teeth 120 of one of the load share spur gears 35 (i.e., gear 100) may "wind up" or experience unequal torque due to the split torque transmission module 25 including two load share spur gears 35. Allowing the gear teeth 120 to rotate relative to the hub 105 equally distributes the torque between the two load share spur gears 35, which prevents unwanted fatigue to the gear 100 and knocking in the drive train 10. Further, the weight of the gear 100 is reduced by including a web 125 having only radial springs 160. In the illustrated embodiment, the web is void of all other structures besides the radial springs. In other embodiments, the web 125 may also include a structure (e.g., disc, lattice structure, etc.) extending between the radial springs 160. In other words, the radial springs 160 may be embedded in a material that occupies the area defined by the web 125.

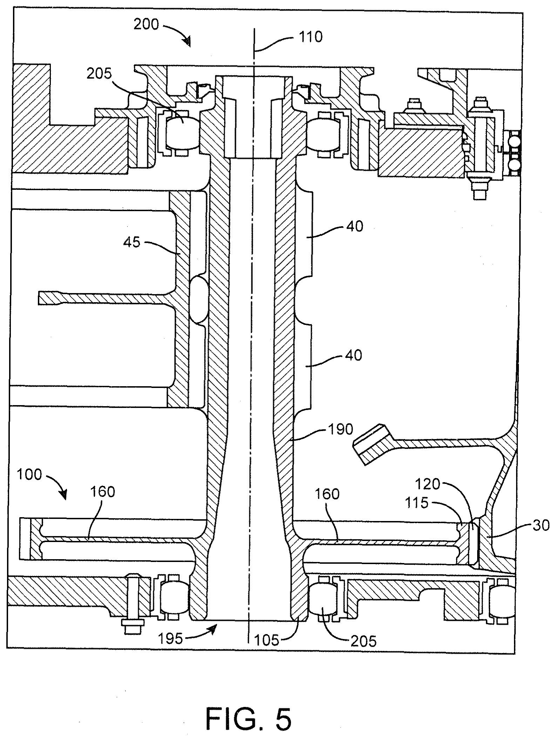

FIG. 5 illustrates the gear 100 as the split load spur gear 35 in the drive train 10 described above. As such, like features will be represented with like reference numbers. However, the gear 100 includes a stem 190 extending from the central hub 105. The stem 190 includes first and second helical pinions 40 that are axially spaced along the stem and each engage the double helical bull gear 45. The gear 100 defines a first end 195 adjacent the radial springs 160 and a second end 200 adjacent the helical pinions 40. The first and second ends 195, 200 are positioned within bearings 205 that assist with rotation of the gear 100. The gear teeth 120 on the outer ring 115 receive torque from the second stage spur pinion 30 and the helical pinions 40 transfer the torque to the bull gear 45. In the illustrated embodiment, the gear 100, the stem 190, and the helical pinions 40 are formed as a single integral piece as will be described in more detail below.

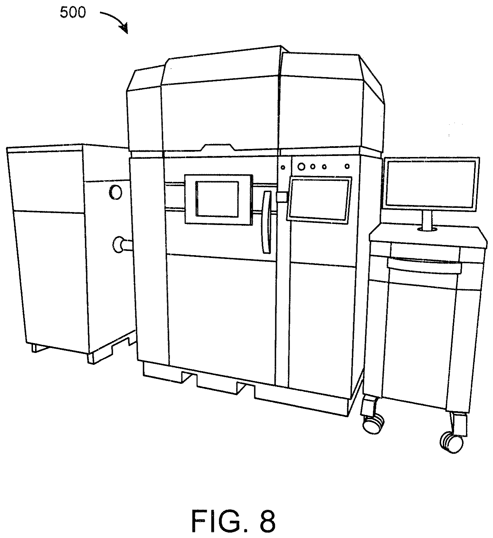

In the illustrated embodiment, the gear 100 is manufactured using an additive manufacturing process, such as 3D printing. Specifically, the gear 100 is made by adding layer-upon-layer of metal material (e.g., a liquid powder material or a fused powder) to create the general shape of the gear. In some embodiments, the metal material may be, for example, Ferrium C64 gear steel. In other embodiments, the metal material may be Cress3161, c64 steel, or other ferrous alloy materials. To create the gear 100 using 3D printing, a 3D drawing of the gear 100 may be produced in a computer aided design (CAD) software program. Then, a printing machine 1000, such as the one shown in FIG. 8, reads data from the CAD file and lays down or adds successive layers of fused powder metals in a layer-upon-layer fashion to fabricate the gear 100. Specifically, the machine 1000 used to produce the gear 100 is a Laser Powder Bed Fusion (LPBF) machine called the M290. Different sizes and/or shapes of gears (e.g., gears having different numbers of teeth, lattice structures, etc.) may be made using this process. In other embodiments, other relevant powder metal additive manufacturing process may be used to manufacture the gear 100. For example, the gear 100 may be produced through a binder jetting process followed by a sintering process. Alternatively, the gear 100 may be produced through a directed energy disposition process

By using an additive manufacturing process, the radial springs 160 may be incorporated into the gear 100 without having to later remove material from the gear 100. This process helps reduce costs by not wasting excess material. In addition, the overall shape of the gear 100 can be more precisely designed. For example, using an additive manufacturing process the gear 100 can be minimally processed and is produced at near net-shape. In other words, after the additive manufacturing process is completed, the gear 100 is generally at final form. Further, the additive manufacturing process produces the gear 100 in monolithic form as a single piece (including or not including the stem 190 and helical pinions 40) without the need to add other components post manufacturing. As such, the gear 100 is generally made entirely from the same material. In some embodiments, the gear 100 may be made using two or more materials. In other embodiments, the gear 100 may be produced using other manufacturing processes such as injection molding, or the like. In further embodiments, the gear 100 may be formed to near net form including the central hub 105, the web 125 with the radial springs 160, and the outer ring 115 and then a further manufacturing process may be used to form the gear teeth 120 or the feature to connect the shaft to the gear 100. For example, the gear teeth 120 may be added through a grinding process after a majority of the body of the gear 100 has been formed.

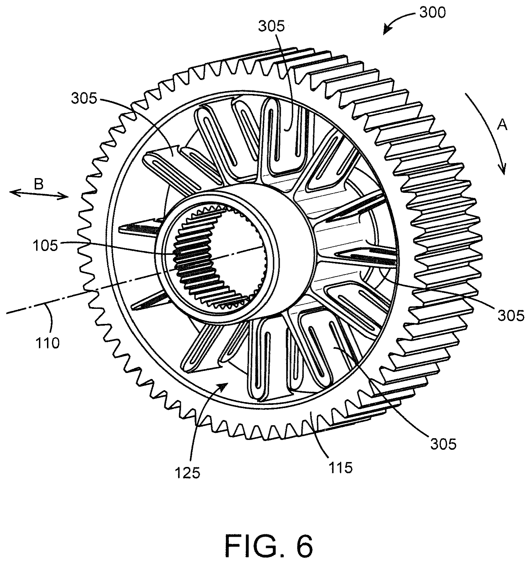

FIG. 6 illustrates a gear 300 for use in the drive train 10 described above according to another embodiment. The gear 300 is similar to the gear 100 described above with like features being represented with like reference numbers. However, the gear 300 includes the web 125 with radial springs 305 that are different from the radial springs 160. In the illustrated embodiment, the web 125 includes twelve radial springs 305 evenly spaced circumferentially about the rotation axis 110. Similar to the radial springs 160, radial springs 305 on opposite sides of the central hub 105 are aligned through the rotation axis 110. As such, the radial springs 305 extend rectilinearly from the rotation axis 110 between the central hub 105 and the outer ring 115.

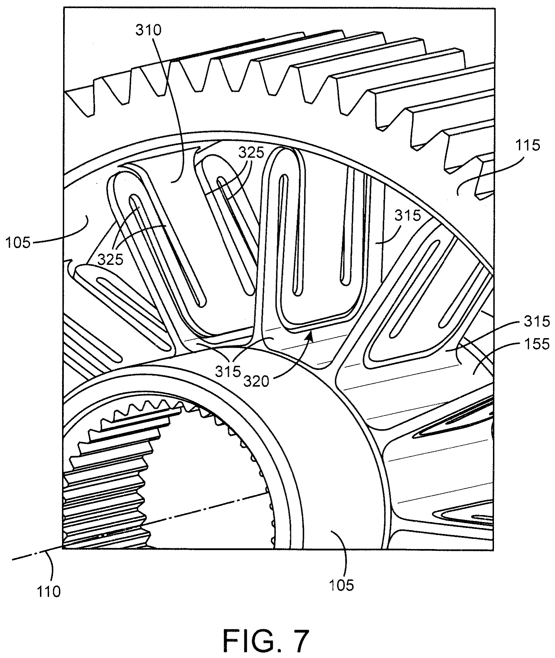

With reference to FIG. 7, the radial springs 305 include a portion or primary connection 310 that is coupled to the interior wall 150 of the outer ring 115 and two portions or two secondary connections 315 on opposite sides of the primary connection 310 that are coupled to the exterior wall 155 of the central hub 105. The primary connection 310 extends radially inward towards the exterior wall 155 and connects to ends of the secondary connections 315 to form a gap 320 between the exterior wall 155 and the primary connection 310. Conversely, the secondary connections 315 extend radially outward from the exterior wall 155 towards the interior wall 150 and then switchbacks and extends radially inwards towards the exterior wall 155 to couple to the primary connection 310. The switchback in the secondary connections 315 defines gaps 325 that are spaced apart in a direction parallel to the rotation axis 110. The gaps 320, 325 allow the radial spring 305 to be resilient in the torsional direction A similar to the gaps 185 described above. In other words, the primary connection 310 is able to rotate or pivot relative to the secondary connections 315 during operation. In addition, since the radial springs 305 extend rectilinearly from the central hub 105, the radial springs 305 reinforce the gear 300 in the radial direction B.

Various features of the invention are set forth in the following claims.

## Claims

1. A monolithic transmission gear produced through additive manufacturing, the transmission gear comprising:
a central hub defining a rotation axis;
an outer ring including a plurality of gear teeth spaced circumferentially about the outer ring; and
a web interconnecting the central hub to the outer ring, the web including a plurality of radial springs extending between the central hub and the outer ring, the radial springs being radially stiff to center the outer ring about the central hub and being torsionally resilient to permit relative rotation between the outer ring and the central hub.

2. The gear of claim 1, wherein one of the plurality of springs is aligned with another of the plurality of springs through the rotation axis.

3. The gear of claim 1 or 2, wherein the gear is made of Ferrium C64 gear steel.

4. The gear of one of claims 1-3, wherein the plurality of radial springs includes eight radial springs.

5. The gear of one of claims 1-4, wherein the web is defined by the area between the central hub and the outer ring, and wherein the web is void besides the radial springs.

6. The gear of one of claims 1-5, wherein the radial springs extend rectilinear between the central hub and the outer ring from the rotation axis and /or between an interior wall of the outer ring and an exterior wall of the central hub, particularly wherein the gear teeth are positioned on an exterior wall of the central ring opposite the interior wall.

7. The gear of one of claims 1-6, wherein the radial springs are evenly spaced about the rotation axis.

8. A transmission gear comprising:
a central hub defining a rotation axis and an exterior wall;
an outer ring including a plurality of gear teeth spaced circumferentially about the outer ring, the outer ring defining an interior wall; and
a plurality of radial springs extending between the interior wall of the outer ring and the exterior wall of the central hub, the radial spring including a first portion coupled to either the interior wall or the exterior wall and a second portion that is moveable relative to the first portion to permit relative rotation between the outer ring and the central hub.

9. The gear of claim 8, wherein the first portion is coupled to the exterior wall of the central hub and the second portion is coupled to the interior wall of the outer ring, and/or the second portion defines a plurality of layers that are spaced apart from each other.

10. The gear of one of claims 8-9, wherein a gap is defined between the first portion and the second portion to allow movement of the second portion relative to the first portion.

11. The gear of one of claims 8-10, wherein the radial springs are sheet shaped.

12. A method of manufacturing a gear, the method comprising:
forming a body by an additive manufacturing process, the body having a central hub defining a rotation axis, an outer ring, and plurality of radial springs extending between the between the central hub and the outer ring, the radial springs being radially stiff to center the outer ring about the central hub and being torsionally resilient to permit relative rotation between the outer ring and the central hub.

13. The method of claim 12, wherein forming the body by the additive manufacturing process includes laying successive layers of liquid powder material.

14. The method of one of claims 12-13, wherein forming the body by the additive manufacturing process includes forming a plurality of gear teeth circumferentially spaced about the outer ring, and/or forming the body at near net form in a single monolithic piece.

15. The method of one of claims 12-14, wherein forming the body by the additive manufacturing process includes forming the radial springs with a first portion coupled to either the outer ring or the central hub and a second portion that is moveable relative to the first portion to permit relative rotation, and/or forming a stem having a helical pinion, the stem extending from the central hub.
